(19) Europäisches Patentamt
European Patent Office
Office européen des brevets

(11) **EP 2 198 241 B1**

(12) **EUROPÄISCHE PATENTSCHRIFT**

(45) Veröffentlichungstag und Bekanntmachung des Hinweises auf die Patenterteilung:
**01.12.2010 Patentblatt 2010/48**

(21) Anmeldenummer: **08804017.5**

(22) Anmeldetag: **11.09.2008**

(51) Int Cl.:
***G01B 7/02*** *(2006.01)*

(86) Internationale Anmeldenummer:
**PCT/EP2008/062050**

(87) Internationale Veröffentlichungsnummer:
**WO 2009/047073 (16.04.2009 Gazette 2009/16)**

(54) **SENSOREINRICHTUNG ZUR KAPAZITIVEN ABSTANDSERMITTLUNG**

SENSOR DEVICE FOR CAPACITIVE DISTANCE DETERMINATION

DISPOSITIF DÉTECTEUR POUR DÉTERMINATION CAPACITIVE DE DISTANCE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **05.10.2007 DE 102007047716**

(43) Veröffentlichungstag der Anmeldung:
**23.06.2010 Patentblatt 2010/25**

(73) Patentinhaber: **Robert Bosch GmbH**
**70442 Stuttgart (DE)**

(72) Erfinder:
• **MERKEL, Rudolf**
**76297 Stutensee (DE)**
• **ZIMMERMANN, Uwe**
**71686 Remseck (DE)**

(56) Entgegenhaltungen:
**EP-A- 1 640 687        CA-A1- 1 239 785**
**GB-A- 2 255 641        GB-A- 2 366 385**
**US-A1- 2006 055 415**

**Beschreibung**

Die Erfindung betrifft eine Sensoreinrichtung, insbesondere Sensoreinrichtung in oder an einem Fahrzeug, zur kapazitiven Ermittlung des Abstandes zwischen der Sensoreinrichtung und einem Objekt, mit einer Elektrode zur Bildung einer kapazitiven Anordnung mit dem Objekt und einer Vorrichtung zum Erstellen eines zur Kapazität der kapazitiven Anordnung proportionalen Signals.

**Stand der Technik**

Eine derartige Sensoreinrichtung ist aus z.B. der GB-A-2 366 385 bekannt. Sie wird zum Beispiel in oder an Fahrzeugen zur Abstandsmessung zwischen dem Fahrzeug und außerhalb des Fahrzeugs angeordneten Objekten, wie zum Beispiel anderen Fahrzeugen, in der Umgebung des Fahrzeugs genutzt. Dazu ist eine Elektrode am Fahrzeug angebracht, die zusammen mit dem Objekt (als Gegenelektrode) eine kapazitive Anordnung bildet. Die Kapazität dieser Anordnung wird ermittelt und daraus der Abstand zwischen der Sensoreinrichtung beziehungsweise des Fahrzeugs und dem Objekt bestimmt. Dabei geht unter Anderem auch die Dielektrizitätskonstante des zwischen der Elektrode und dem Objekt angeordneten Materials - hier also im Wesentlichen der Luft - ein. Bei einer derartigen Anordnung wird deren Kapazität aufgrund des hohen Unterschieds der die Dielektrizitätskonstanten von Wasser und Luft somit stark von Witterungseinflüssen wie zum Beispiel schwankender Luftfeuchtigkeit oder Temperaturschwankungen beeinflusst.

**Offenbarung der Erfindung**

Zur Eliminierung des Einflusses der Dielektrizitätskonstante ist gemäß Anspruch 1 vorgesehen, dass die Sensoreinrichtung eine Referenzelektrode zur Bildung einer kapazitiven

Referenzanordnung mit dem Objekt, eine weitere Vorrichtung zum Erstellen eines zur Kapazität der kapazitiven Referenzanordnung proportionalen Referenzsignals und eine Auswerteeinrichtung zur Ermittlung des Abstandes durch Bildung eines Verhältnisses aus dem Signal und dem Referenzsignal aufweist, wobei die Referenzelektrode eine Elektrodenform aufweist, die von der Elektrodenform der Elektrode abweicht. Durch die unterschiedlichen Elektrodenformen weicht die Abhängigkeit der Kapazität der Referenzanordnung vom Abstand zwischen der Referenzelektrode und dem Objekt von der Abhängigkeit der Kapazität der Anordnung an den zugeordneten Abstand zwischen der Elektrode und dem Objekt ab. Wird mittels der Auswerteeinrichtung das Verhältnis zwischen der Kapazität $C_1$ der kapazitiven Anordnung und der Referenzkapazität $C_2$ der kapazitiven Referenzanordnung gebildet, so kürzt sich die die Dielektrizitätskonstante $\varepsilon = \varepsilon_0 \, \varepsilon_r$ des zwischen der Elektrode und dem Objekt beziehungsweise der Referenzelektrode und dem Objekt angeordneten Materials heraus. Es ergibt sich eine Abstandsabhängigkeit des Verhältnisses, die nur von geometrischen Größen und dem jeweiligen Abstand der Elektrode/Referenzelektrode von dem Objekt abhängt. Die Sensoreinrichtung ist insbesondere eine Sensoreinrichtung in oder an einem Fahrzeug und dient vorzugsweise zur Ermittlung des Abstandes zwischen dem Fahrzeug und einem vorzugsweise außerhalb des Fahrzeugs angeordneten Objekt. Dieses außerhalb des Fahrzeugs angeordnete Objekt ist beispielsweise ein weiteres Fahrzeug.

In einer vorteilhaften Ausgestaltung der Erfindung ist vorgesehen, dass eine der beiden Elektroden (Elektrode oder Referenzelektrode) als eine plattenförmige oder im Wesentlichen plattenförmige Elektrode ausgebildet ist und/oder die andere der beiden Elektroden als eine zylinderförmige oder im Wesentlichen zylinderförmige Elektrode ausgebildet ist. Die Elektrodenformen der plattenförmigen und der Zylinderförmigen Elektrode unterscheiden sich deutlich. Eine weitgehend zylinderförmige Elektrode kann zum Beispiel von einem entsprechend geformten Leiter gebildet sein. Bei einer plattenförmigen Elektrode/Referenzelektrode kann die kapazitive Anordnung/Referenzanordnung näherungsweise als Plattenkondensator betrachtet werden. Bei einer zylinderförmigen Elektrode/Referenzelektrode kann die kapazitive Anordnung/Referenzanordnung für einen Abstand zwischen der Elektrode/Referenzelektrode und dem Objekt, der deutlich größer ist als der Radius r der zylinderförmigen Elektrode, näherungsweise als Zylinderkondensator angesehen werden. Vorzugsweise ist vorgesehen, dass die eine der beiden Elektroden als plattenförmige Elektrode und die andere der beiden Elektroden als zylinderförmige Elektrode ausgebildet ist.

In einer vorteilhaften Ausgestaltung der Erfindung ist vorgesehen, dass zumindest eine der Vorrichtungen zum Erstellen des Signals/Referenzsignals von der jeweils anderen Vorrichtung zum Erstellen des Signals/Referenzsignals und der Auswerteeinrichtung galvanisch getrennt ist. Durch diese galvanische Trennung kann das Erstellen des Signals/Referenzsignals in den beiden Vorrichtungen unabhängig voneinander erfolgen.

Insbesondere ist vorgesehen, dass mindestens eine der Vorrichtungen zum Erstellen des Signals/Referenzsignals mit der ihr zugeordneten kapazitiven Anordnung/Referenzanordnung einen Schwingkreis bildet. Dabei ist bevorzugt vorgesehen, dass das Signal/Referenzsignal eine Zeitkonstante oder eine Frequenz des Schwingkreises ist.

Mit Vorteil weist mindestens eine der Vorrichtungen zum Erstellen des Signals/Referenzsignals eine Schirmelektrode zum Abschirmen weiterer Potentiale auf. Ist die Sensoreinrichtung in oder an einem Fahrzeug, so schirmen die Schirmelektroden die Elektrode beziehungsweise die Referenzelektrode insbesondere gegen die Potentiale des Fahrzeugs ab.

Weiterhin ist mit Vorteil vorgesehen, dass die Vorrichtungen zum Erstellen des Signals/Referenzsignals das Signal und/oder das Referenzsignal als digitale Signale an die Auswerteeinrichtung ausgeben. Dazu wird das Signal/ Referenzsignal vorzugsweise mittels eines Analog-Digital-Wandlers der zugeordneten Vorrichtung in das digitale Signal beziehungsweise digitale Referenzsignal gewandelt. Anschließend wird dieses digitale Signal/Referenzsignal an die Auswerteeinrichtung ausgegeben. Durch die Ausgabe als digitales Signal/Referenzsignal kann die galvanische Trennung einfach und sicher realisiert werden.

Schließlich ist mit Vorteil vorgesehen, dass die Auswerteeinrichtung einer Recheneinheit zur Bildung des Verhältnisses zwischen dem Signal und dem Referenzsignal und zur Ermittlung des Abstandes aus diesem Verhältnis aufweist.

### Kurze Beschreibung der Zeichnungen

Die Erfindung wird nachfolgend in einem Ausführungsbeispiel anhand der zugehörigen Zeichnungen näher erläutert. Es zeigen:

Figur 1     eine schematische Darstellung einer Sensoreinrichtung und

Figur 2     die an einem Fahrzeug angeordnete Sensoreinrichtung mit einer Elektrode und einer Referenzelektrode und ein weiteres Fahrzeug.

### Ausführungsform(en) der Erfindung

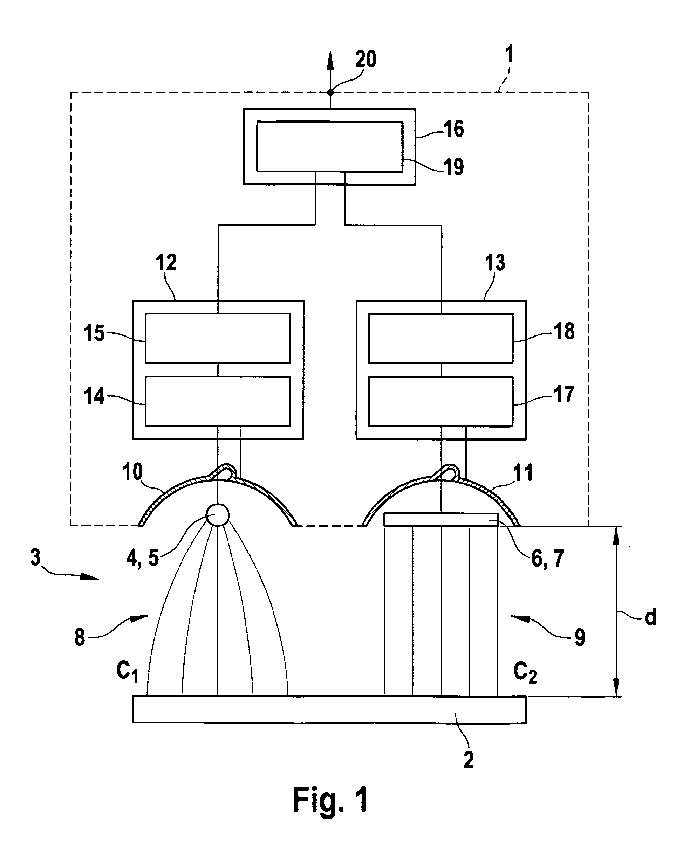

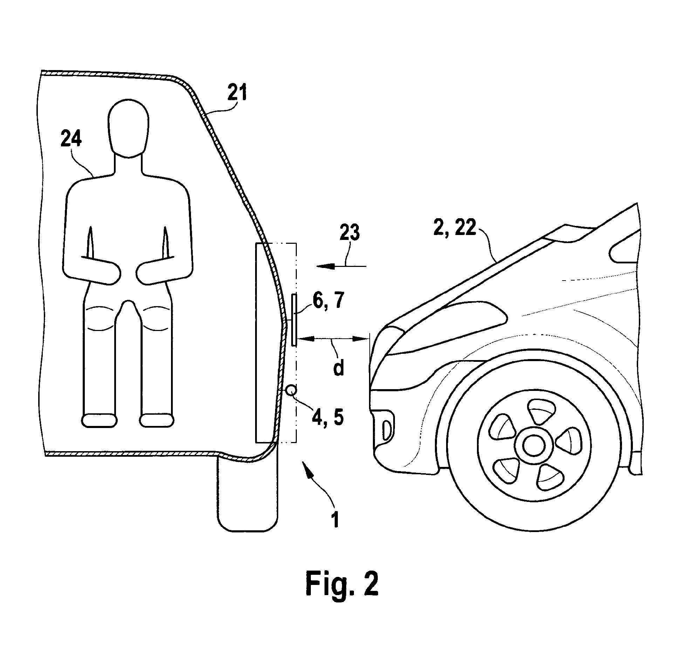

Die Figur 1 zeigt in schematischer Darstellung eine Sensoreinrichtung 1 zur kapazitiven Ermittlung des Abstandes zwischen ihr und einem Objekt 2, das sich in einem Ermittlungsbereich 3 befindet. Die Sensoreinrichtung ist an einem nicht gezeigten Fahrzeug angeordnet und dient - wie Figur 2 zeigt - zur Ermittlung des Abstandes zwischen ihr und Objekten außerhalb des Fahrzeugs. Somit ist der Ermittlungsbereich ein Bereich außerhalb des Fahrzeugs. Die Sensoreinrichtung 1 weist eine als im Wesentlichen zylinderförmige Elektrode 4 ausgebildete Elektrode 5 und eine als plattenförmige Elektrode 6 ausgebildete Referenzelektrode 7 auf. Die Elektrode 5 bildet mit dem Objekt 2 eine kapazitive Anordnung 8, die durch Feldlinien zwischen der Elektrode 5 und dem Objekt 2 angedeutet ist. Die Referenzelektrode 7 bildet mit dem Objekt 2 eine kapazitive Referenzanordnung 9, die durch entsprechende Feldlinien angedeutet ist. Damit die kapazitive Anordnung 8 und die kapazitive Referenzanordnung 9 jeweils auf den Ermittlungsbereich 3 beschränkt ist, ist die Elektrode 5 von einer ersten Schirmelektrode 10 und die Referenzelektrode 7 von einer zweiten Schirmelektrode 11 bereichsweise umgeben. Die Schirmelektroden 10, 11 schirmen die beiden Elektroden 5, 7 gegen Potentiale außerhalb des Ermittlungsbereichs 3 ab. Die Elektrode 5 ist mit einer Vorrichtung 12 zum Erstellen eines zu einer Kapazität $C_1$ der kapazitiven Anordnung 8 proportionalen Signals verbunden. Die Referenzelektrode 7 ist mit einer weiteren Vorrichtung 13 zum Erstellen eines zur Kapazität $C_2$ der kapazitiven Referenzanordnung 9 proportionalen Referenzsignals verbunden. Zum Erstellen des Signals I weist die Vorrichtung 12 eine Messschaltung 14 (insbesondere Schwingkreis), zum Erstellen des eigentlichen Signals auf, in die die kapazitive Anordnung 8 elektrisch eingebunden ist. Das eigentliche Signal wird anschließend an einen Analog-Digitalwandler 15 ausgegeben, der aus dem eigentlichen Signal ein entsprechendes digitales Signal I erstellt und an eine Auswerteeinrichtung 16 ausgibt. Die weitere Vorrichtung weist eine Messschaltung 17 auf, in die die kapazitive Referenzanordnung 9 elektrisch eingebunden ist. Mittels der Messschaltung 17 wird ein eigentliches Referenzsignal $I_R$ erstellt, das zur Kapazität $C_2$ der kapazitiven Referenzanordnung 9 proportional ist. Dieses eigentliche Referenzsignal $I_R$ wird an einen Analog-Digital-Wandler 18 der weiteren Vorrichtung 13 ausgegeben. Der Analog-Digital-Wandler 18 erstellt aus diesem eigentlichen Referenzsignal $I_R$ ein digitales Referenzsignal $I_R$, das ebenfalls an die Auswerteeinrichtung 16 ausgegeben wird. Die Auswerteeinrichtung 16 weist eine Recheneinheit 19 zur Bildung eines Verhältnisses aus dem Signal und dem Referenzsignal und zur Ermittlung des Abstandes d aus diesem Verhältnis auf. Der ermittelte Abstand wird anschließend über einen Ausgang 20 ausgegeben.

Es ergibt sich folgende Funktion der Sensoreinrichtung 1 zur kapazitiven Ermittlung des Abstandes d zwischen ihr und einem Objekt 2: Durch die unterschiedlichen Elektrodenformen der Elektrode 5 und der Referenzelektrode 7 ergeben sich unterschiedliche Abhängigkeiten der Kapazitäten $C_1$ $C_2$ der kapazitiven Anordnung 8 und der kapazitiven Referenzanordnung 9 vom Abstand d. Die Kapazität $C_1$ der kapazitiven Anordnung (Einfachleiteranordnung) mit einer weitgehend zylinderförmigen Elektrode 4 kann durch die Kapazität eines Zylinderkondensators genährt werden. Es ergibt sich für die Kapazität $C_1$ der Anordnung

$$C_1 = 2 \cdot \pi \cdot \frac{\varepsilon_0 \varepsilon_r \cdot A}{\ln(d/2r)} \qquad (1)$$

Die Kapazität $C_2$ der kapazitiven Referenzanordnung 9 kann genährt als Kapazität eines Plattenkondensators angenommen werden und ergibt sich zu:

$$C_2 = \frac{\varepsilon_0 \varepsilon_r \cdot A}{d} \qquad (2)$$

Dabei ist I die Länge der Elektrode 5, r der Radius der Elektrode 5 und d der Abstand zur Oberfläche des Objekts 2. Beim Plattenkondensator ist A die wirksame Elektrodenfläche und d der Plattenabstand. Weiterhin gehen die elektrische Feldkonstante $\varepsilon_0$ und die die $\varepsilon_r$ in die Gleichungen 1 und 2 ein. Die Dielektrizitätskonstante $\varepsilon_r$ ist eine charakteristische Materialkonstante des Materials zwischen der Elektrode/Referenzelektrode 5, 7 und dem Objekt 2. Wird die Sensoreinrichtung 1 zur Abstandsmessung zwischen der Sensoreinrichtung 1 und einem Objekt 2 außerhalb eines Fahrzeugs genutzt, so wird die Kapazität der Anordnungen 8, 9 aufgrund der wesentlich höheren Dielektrizitätskonstante von Wasser gegenüber der Dielektrizitätskonstante von Luft stark von Witterungseinflüssen wie schwankender Luftfeuchtigkeit und Temperaturschwankungen beeinflusst. Durch die Messung mit der Elektrode 5 und der Referenzelektrode 7, die als Elektroden 5, 7 unterschiedlicher Elektrodenformen ausgebildet sind, können diese Witterungsabhängigkeiten eliminiert werden.

Die Messung der Kapazitäten $C_1$, $C_2$ erfolgt mittels der Messschaltungen 14, 17 zum Beispiel durch Messung einer Anstiegszeit als Zeitkonstante. Die Messung der Kapazitäten $C_1$, $C_2$ beziehungsweise das Erstellen von zu den Kapazitäten $C_1$, $C_2$ proportionalen Signalen I, $I_R$ muss dabei unabhängig voneinander erfolgen. Dies wird über eine galvanische Trennung mittels der Analog-Digital-Wandler 15, 18 erreicht, deren Ausgangssignale unabhängig vom Potential der Elektrode 5 beziehungsweise der Referenzelektrode 7 ist. Die Ausgangssignale der Analog-Digital-Wandler 15, 18 (digitales Signal und digitales Referenzsignal) werden auf die Auswerteeinrichtung 16 gegeben, die ein Verhältnis aus dem Signal und dem Referenzsignal (C, : $C_2$) bildet. Durch diese Quotientenbildung wird erreicht, dass sich die witterungsabhängige Dielektrizitätskonstante $\varepsilon_r$ herauskürzt. Es ergibt sich die folgende Abstandsabhängigkeit: q (d), die nur von geometrischen Größen und dem Abstand d der Elektroden 5, 7 von der Oberfläche des Objekts als Gegenelektrode abhängt:

$$\frac{C_1}{C_2} = 2 \cdot \pi \cdot \frac{l}{A} \cdot \frac{d}{\ln(d/2r)} \qquad (3)$$

Die Figur 2 zeigt ein Ausführungsbeispiel zur Anbringung der Sensoreinrichtung 1 mit der Elektrode 5 und der Referenzelektrode 7 an einem Fahrzeug 21. Die entsprechende Gegenelektrode der kapazitiven Anordnung 8 und der kapazitiven Referenzanordnung 9 wird durch das als weiteres Fahrzeug 22 ausgebildete Objekt gebildet. Nicht eingezeichnet sind die Schirmelektroden zur Abschirmung der Elektroden 5, 7 gegen die Masse des Fahrzeugs 21. Durch kontinuierliche Ermittlung des Abstandes d oder eine Ermittlung des Abstandes d in Zeitabständen kann die Relativgeschwindigkeit des Objekts 2 gegenüber der Sensoreinrichtung ermittelt werden. Die Anordnung der Sensoreinrichtung 1 der Figur 2 ist in einem Seitenbereich des Fahrzeugs 21 und kann dazu genutzt werden, einen Zusammenstoß mit dem sich auf das Fahrzeug 21 zu bewegenden weiteren Fahrzeugs 22 (Pfeil 23) deutlich vor dem eigentlichen Aufprall zu detektieren und zum Beispiel Maßnahmen zum Schutz der Insassen 24 des Fahrzeugs 21 zu treffen.

**Patentansprüche**

1. Sensoreinrichtung, insbesondere Sensoreinrichtung in oder an einem Fahrzeug, zur kapazitiven Ermittlung des Abstandes zwischen der Sensoreinrichtung und einem Objekt, mit einer Elektrode zur Bildung einer kapazitiven Anordnung mit dem Objekt und einer Vorrichtung zum Erstellen eines zur Kapazität der kapazitiven Anordnung proportionalen Signals (1), **gekennzeichnet durch** eine Referenzelektrode (7) zur Bildung einer kapazitiven Referenzanordnung (9) mit dem Objekt (2), einer weiteren Vorrichtung (13) zum Erstellen eines zur Kapazität ($C_2$) der kapazitiven Referenzanordnung (9) proportionalen Referenzsignals ($I_R$) und einer Auswerteeinrichtung (16) zur Ermittlung des Abstandes (d) **durch** Bildung eines Verhältnisses aus dem Signal (I) und dem Referenzsignal ($I_R$), wobei die Referenzelektrode (7) eine Elektrodenform aufweist, die von der Elektrodenform der Elektrode (5) abweicht.

2. Sensoreinrichtung nach Anspruch 1, **dadurch gekennzeichnet, dass** das Objekt (2) ein außerhalb des Fahrzeugs (21) angeordnetes Objekt (2) ist.

3. Sensoreinrichtung nach einem der vorhergehenden Ansprüche, **dadurch gekennzeichnet, dass** eine der beiden Elektroden (5,7) als eine plattenförmige oder im Wesentlichen plattenförmige Elektrode (6) ausgebildet ist und/oder die andere der beiden Elektroden (5,7) als eine zylinderförmige oder im Wesentlichen zylinderförmige Elektrode (4) ausgebildet ist.

4. Sensoreinrichtung nach einem der vorhergehenden Ansprüche, **dadurch gekennzeichnet, dass** zumindest eine der Vorrichtungen (12,13) von der jeweils anderen Vorrichtung (12,13) und der Auswerteeinrichtung (16) galvanisch getrennt ist.

5. Sensoreinrichtung nach einem der vorhergehenden Ansprüche, **dadurch gekennzeichnet, dass** mindestens eine der Vorrichtungen (12,13) mit der ihr zugeordneten kapazitiven Anordnung/Referenzanordnung (8,9) einen Schwingkreis bildet.

6. Sensoreinrichtung nach einem der vorhergehenden Ansprüche, **dadurch gekennzeichnet, dass** mindestens eine der Vorrichtungen (12,13) eine Schirmelektrode (10,11) zum Abschirmen weiterer Potentiale aufweist.

7. Sensoreinrichtung nach einem der vorhergehenden Ansprüche, **dadurch gekennzeichnet, dass** die Vorrichtungen (12,13) das Signal (I) und/oder das Referenzsignal ($I_R$) als digitale Signale an die Auswerteeinrichtung (16) ausgeben.

8. Sensoreinrichtung nach einem der vorhergehenden Ansprüche, **dadurch gekennzeichnet, dass** die Auswerteeinrichtung (16) eine Recheneinheit (19) zur Bildung des Verhältnisses und zur Ermittlung des Abstandes (d) aufweist.

**Claims**

1. Sensor device, in particular sensor device in or on a vehicle, for capacitively determining the distance between the sensor device and an object, having an electrode for forming a capacitive arrangement with the object and an apparatus for creating a signal (I) proportional to the capacitance of the capacitive arrangement, **characterized by** a reference electrode (7) for forming a capacitive reference arrangement (9) with the object (2), a further apparatus (13) for creating a reference signal ($I_R$) proportional to the capacitance ($C_2$) of the capacitive reference arrangement (9) and an evaluation device (16) for determining the distance (d) by forming a ratio from the signal (I) and the reference signal ($I_R$), the reference electrode (7) having an electrode design which differs from the electrode design of the electrode (5).

2. Sensor device according to Claim 1, **characterized in that** the object (2) is an object (2) arranged outside the vehicle (21).

3. Sensor device according to one of the preceding claims, **characterized in that** one of the two electrodes (5, 7) is designed as a plate-shaped or substantially plate-shaped electrode (6) and/or the other of the two electrodes (5, 7) is designed as a cylindrical or substantially cylindrical electrode (4).

4. Sensor device according to one of the preceding claims, **characterized in that** at least one of the apparatuses (12, 13) is DC-isolated from the respective other apparatus (12, 13) and the evaluation device (16).

5. Sensor device according to one of the preceding claims, **characterized in that** at least one of the apparatuses (12, 13) forms a resonant circuit with the capacitive arrangement/reference arrangement (8, 9) associated with it.

6. Sensor device according to one of the preceding claims, **characterized in that** at least one of the apparatuses (12, 13) has a screening electrode (10, 11) for screening further potentials.

7. Sensor device according to one of the preceding claims, **characterized in that** the apparatuses (12, 13) output the signal (I) and/or the reference signal ($I_R$) to the evaluation device (16) in the form of digital signals.

8. Sensor device according to one of the preceding claims, **characterized in that** the evaluation device (16) has a computation unit (19) for forming the ratio and for determining the distance (d).


**Revendications**

1. Dispositif de détection, en particulier dispositif de détection prévu sur ou dans un véhicule, pour la détermination capacitive de la distance entre le dispositif de détection et un objet, le dispositif présentant une électrode qui forme un agencement capacitif avec l'objet et un système qui forme un signal (I) proportionnel à la capacité de l'agencement capacitif,
**caractérisé par**
une électrode de référence (7) qui forme un agencement capacitif de référence (9) avec l'objet (2), un autre système (13) qui forme un signal de référence ($I_R$) proportionnel à la capacité ($C_2$) de l'agencement capacitif de référence (9) et un dispositif d'évaluation (16) qui détermine la distance (d) en formant le rapport entre le signal (I) et le signal de référence ($I_R$), l'électrode de référence (7) présentant une forme qui diffère de la forme de l'électrode (5).

2. Dispositif de détection selon la revendication 1, **caractérisé en ce que** l'objet (2) est un objet (2) situé à l'extérieur du véhicule (21).

3. Dispositif de détection selon l'une des revendications précédentes, **caractérisé en ce que** l'une des deux électrodes (5, 7) est configurée comme électrode (6) en plaque ou essentiellement en plaque et/ou **en ce que** l'autre des deux électrodes (5, 7) est configurée comme électrode (4) cylindrique ou essentiellement cylindrique.

4. Dispositif de détection selon l'une des revendications précédentes, **caractérisé en ce qu'**au moins l'un des systèmes (12, 13) est séparé galvaniquement de l'autre système (12, 13) et du dispositif d'évaluation (16).

5. Dispositif de détection selon l'une des revendications précédentes, **caractérisé en ce qu'**au moins l'un des systèmes (12, 13) forme un circuit oscillant avec l'agencement capacitif ou agencement capacitif de référence (8, 9) qui lui est associé.

6. Dispositif de détection selon l'une des revendications précédentes, **caractérisé en ce qu'**au moins l'un des systèmes (12, 13) présente une électrode de blindage (10, 11) qui bloque d'autres potentiels.

7. Dispositif de détection selon l'une des revendications précédentes, **caractérisé en ce que** les systèmes (12, 13) délivrent le signal (I) et/ou le signal de référence ($I_R$) sous la forme de signaux numériques au dispositif d'évaluation (16).

8. Dispositif de détection selon l'une des revendications précédentes, **caractérisé en ce que** le dispositif d'évaluation (16) présente une unité de calcul (19) qui forme le rapport et qui détermine la distance (d).

**Fig. 1**

**Fig. 2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- GB 2366385 A